# EUROPÄISCHE PATENTSCHRIFT

(11) **EP 2 657 803 B1**
(45) Veröffentlichungstag und Bekanntmachung des Hinweises auf die Patenterteilung: **06.08.2014**
(21) Anmeldenummer: 12165999.9
(22) Anmeldetag: 27.04.2012
(51) Int. Cl.: G05D 23/19

(54) **Raumtemperaturregelanlage und -verfahren für warmwasserbeheizte Räume**
Room temperature control assembly and method for areas heated with hot water
Installation et procédé de réglage de la température ambiante pour pièces chauffées à l'eau chaude

(43) Veröffentlichungstag der Anmeldung: 30.10.2013
(73) Patentinhaber: AFRISO-Euro-Index GmbH, 74363 Güglingen (DE)
(72) Erfinder: Aldinger, Ulrich Dr., 70192 Stuttgart (DE)
(74) Vertreter: Kohler Schmid Möbus

(56) Entgegenhaltungen:
- EP-A1- 2 320 294
- US-A- 6 145 751
- US-A1- 2006 071 087

## Beschreibung

Die vorliegende Erfindung betrifft eine Raumtemperaturregelanlage zum Regeln der Raumtemperatur in warmwasserbeheizten Räumen jeweils auf eine Solltemperatur, wobei für jeden warmwasserbeheizten Raum ein Warmwasserheizkreis zum Heizen oder Kühlen des Raumes, mindestens ein in dem Raum angeordneter Temperaturmessfühler zum Messen der Isttemperatur, eine in dem Raum angeordnete Solltemperatur-Einstelleinrichtung zum Einstellen der Solltemperatur und ein Regler zum Ansteuern eines Ventils des Warmwasserheizkreises anhand der gemessenen Isttemperatur und der eingestellten Solltemperatur vorgesehen sind, sowie auch ein Verfahren zum Regeln der Raumtemperatur in warmwasserbeheizten Räumen.

Eine derartige Raumtemperaturregelanlage ist beispielsweise durch die EP 2 320 294 A1 bekannt geworden.

Bei dieser bekannten Raumtemperaturregelanlage werden die von einem Temperaturmessfühler gemessenen Isttemperaturen per Draht oder per Funk an einen Regler übertragen, der anhand der Ist- und Solltemperaturen ein Ventil des Warmwasserheizkreises des Raumes ansteuert. Die gewünschte Solltemperatur des Raumes wird direkt am Temperaturmessfühler über eine Solltemperatur-Einstelleinrichtung eingestellt und ebenfalls per Draht oder per Funk an den jeweiligen Regler übertragen.

Es die Aufgabe der vorliegenden Erfindung, bei einer Raumtemperaturregelanlage der eingangs genannten Art die Regelung weiter zu verbessern und insbesondere die Einstellbarkeit der Solltemperatur zu vereinfachen.

Diese Aufgabe wird erfindungsgemäß dadurch gelöst, dass die Solltemperatur-Einstelleinrichtungen mit den jeweiligen Reglern über einen zwischengeschalteten Rechner verbunden sind, der die von den Solltemperatur-Einstelleinrichtungen gelieferten Solltemperaturen aufgrund von zusätzlichen Mess-, Auswertungs- oder Benutzerdaten entweder unverändert oder modifiziert an die Regler weitergibt.

Erfindungsgemäß werden also die vor Ort in den Räumen eingestellten Solltemperaturen an die Regler nur von dem zwischengeschalteten Rechner weitergegeben, der diese eingestellten Solltemperaturen bei Bedarf derart modifiziert, dass sich das gewünschte Regelverhalten einstellt. In diesem Fall gibt der Rechner also nicht die tatsächlich eingestellten Solltemperaturen, sondern entsprechend höhere oder tiefere Solltemperaturen an die einzelnen Regler weiter. Die Hoheit zum Einstellen der Solltemperaturen ist somit von den Solltemperatur-Einstelleinrichtungen auf den Rechner übergegangen.

Bevorzugt sind auch die Temperaturmessfühler mit den jeweiligen Reglern über den zwischengeschalteten Rechner verbunden, der aufgrund der gemessenen Isttemperaturen die an die Regler weiterzugebenden Solltemperaturen entsprechend modifizieren kann.

Weiterhin bevorzugt ist in jedem warmwasserbeheizten Raum mindestens ein Luftfeuchtigkeitsmessfühler zum Messen der Luftfeuchtigkeit angeordnet, wobei die Luftfeuchtigkeitsmessfühler mit den jeweiligen Reglern über den zwischengeschalteten Rechner verbunden sind, der aufgrund der gemessenen Luftfeuchtigkeiten die an die Regler weiterzugebenden Solltemperaturen entsprechend modifizieren kann. Sollte beispielsweise die für einen Raum eingestellte Solltemperatur tiefer als die für die gemessene Luftfeuchtigkeit maßgebliche Tautemperatur liegen, so gibt der Rechner an die Regler eine modifizierte Solltemperatur weiter, die höher als diese Tautemperatur ist.

Besonders bevorzugt umfasst der Rechner einen Datenspeicher zum Speichern der an den Solltemperatur-Einstelleinrichtungen eingestellten Solltemperaturen und/oder der an die Regler weitergegebenen Solltemperaturen und/oder der gemessenen Isttemperaturen und/oder der gemessenen Luftfeuchtigkeiten und/oder der von den Reglern an ihre Ventile ausgegebenen Stellsignale und ist insbesondere programmiert, die an die Regler weiterzugebenden Solltemperaturen anhand der gespeicherten Daten ("Historie") zu modifizieren. Der Rechner ist vorteilhafterweise programmiert, die gespeicherten Daten auszuwerten und Optimierungsvorschläge für die Raumtemperaturregelanlage anzuzeigen. Anhand von über Jahre hinweg gespeicherten Daten können beispielsweise Verschlechterungen des Wirkungsgrads der Raumtemperaturregelanlage erkannt und dann entsprechende Gegenmaßnahmen getroffen werden. Auch kann der Rechner aus den für die Vergangenheit gespeicherten Stellsignalen der Ventile die Ventilöffnungszeiten ermitteln und daraus optimierte Durchflüsse in den einzelnen Warmwasserheizkreisen berechnen ("hydraulischer Abgleich"), die dann vom Benutzer entsprechend eingestellt werden können.

Vorzugsweise ist eine Netzwerk-Datenschnittstelle vorgesehen, über welche die von den Solltemperatur-Einstelleinrichtungen gelieferten Solltemperaturen und/oder die gemessenen Isttemperaturen und/oder die gemessenen Luftfeuchtigkeiten und/oder die ausgegebenen Stellsignale und/oder die gespeicherten Daten über ein Netzwerk abrufbar sind und über welche die vom Rechner an die Regler weitergegebenen Solltemperaturen modifizierbar sind. Auf all diese Daten kann dann - bei entsprechender Berechtigung - beispielsweise mit jedem ans Internet angeschlossenen Computer oder mit einem Smartphone mit entsprechender App zugegriffen werden. Die Solltemperatur kann vom Benutzer dann über die Internetschnittstelle, z.B. über die App am Smartphone, direkt im erfindungsgemäßen Rechner eingestellt bzw. verändert werden.

Die Erfindung betrifft in einem weiteren Aspekt auch ein Verfahren zum Regeln der Raumtemperatur in warmwasserbeheizten Räumen, wobei die Isttemperatur der Räume jeweils von mindestens einem Temperaturmessfühler gemessen und jeweils über einen Regler, der einen Warmwasserheizkreis des Raumes anhand der gemessenen Isttemperatur ansteuert, auf eine Solltemperatur geregelt wird, wobei erfindungsgemäß die vor Ort in den Räumen eingestellten Solltemperaturen aufgrund von zusätzlichen Mess-, Auswertungs- oder Benutzerdaten entweder unverändert oder modifiziert an die Regler weitergegeben werden. Die Auswertung der Temperaturdaten kann für jeden Raum separat und/oder raumübergreifend für mehrere, insbesondere alle Räume, erfolgen.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a-1c: verschiedene Varianten einer ersten Ausführungsform der erfindungsgemäßen Raumtemperaturregelanlage; und
- Fig. 2: eine zweite Ausführungsform der erfindungsgemäßen Raumtemperaturregelanlage.

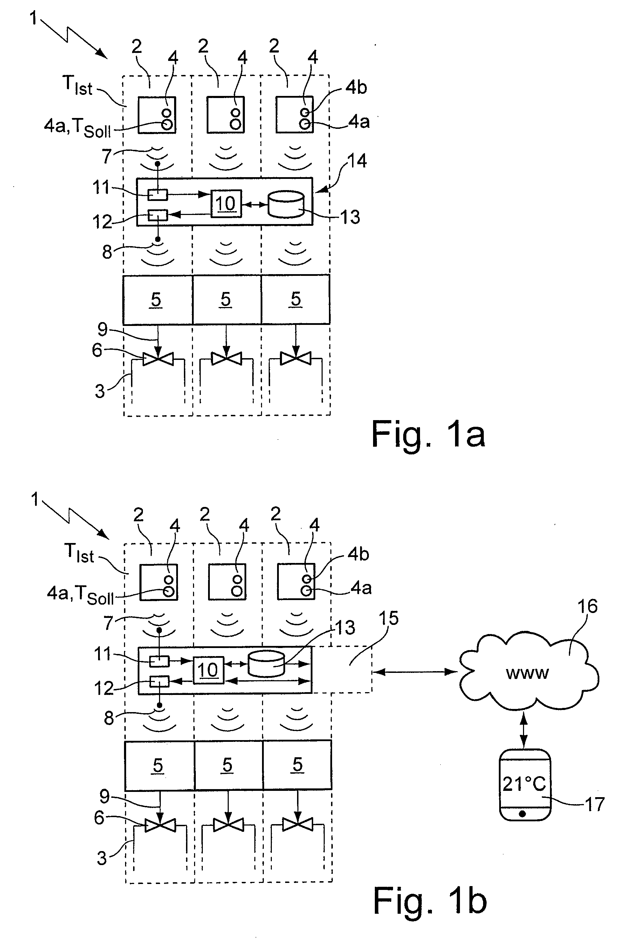

Die in **Fig. 1a** gezeigte Raumtemperaturregelanlage **1** dient zum Regeln der Raumtemperatur in mehreren warmwasserbeheizten Räumen **2**. auf jeweils eine Solltemperatur T_{Sol**l**}.

Die Raumtemperaturregelanlage **1** umfasst für jeden warmwasserbeheizten Raum 2 jeweils einen Warmwasserheizkreis **3** zum Heizen oder Kühlen des Raumes 2, mindestens einen in dem Raum 2 angeordneten Temperaturmessfühler **4** zum Messen der Isttemperatur T_{Ist}**,** eine in dem Raum 2 angeordnete Solltemperatur-Einstelleinrichtung **4a** zum Einstellen der Solltemperatur T_{Soll}, mindestens einen in dem Raum 2 angeordnete Luftfeuchtigkeitsmessfühler **4b** zum Messen der Luftfeuchtigkeit und einen Regler **5** zum Ansteuern eines Ventils **6** des Warmwasserheizkreises 3 anhand der gemessenen Isttemperatur T_{Ist} und der eingestellten Solltemperatur T_{Soll}. Im gezeigten Ausführungsbeispiel sind die Solltemperatur-Einstelleinrichtung 4a und der Luftfeuchtigkeitsmessfühler 4b am Temperaturmessfühler 4 angeordnet bzw. in dessen Gehäuse integriert.

Die Temperaturmessfühler 4, die Solltemperatur-Einstelleinrichtung 4a und die Luftfeuchtigkeitsmessfühler 4b sind mit ihren jeweiligen Reglern 5 über einen zwischengeschalteten Rechner **10** verbunden, der die von den Temperaturmessfühlern 4 gemessenen Isttemperaturen T_{Ist}, die an den Solltemperatur-Einstelleinrichtungen 4a eingestellten Solltemperaturen T_{Soll} und die von den Luftfeuchtigkeitsmessfühlern 4b gemessenen Luftfeuchtigkeiten einzeln oder gemeinsam bzw. raumübergreifend auswertet und basierend auf dieser Auswertung die eingestellten Solltemperaturen T_{Soll} entweder unverändert oder aber modifiziert an den jeweiligen Regler 5 weitergibt.

Die Datenübertragung von den Temperaturmessfühlern 4, den Solltemperatur-Einstelleinrichtungen 4a und den Luftfeuchtigkeitsmessfühlern 4b an den Rechner 10 sowie vom Rechner 10 an die Regler 5 erfolgt dabei jeweils über Funksignale **7, 8.** Dazu weist der Rechner 10 einen Funkempfänger **11** zum Empfangen der gesendeten Daten und einen Funksender **12** zum Senden der Ist- und Solltemperaturen T_{Ist}, T_{Soll} an die einzelnen Regler 5 auf. Der Rechner (z.B. ein Mikroprozessor) 10 speichert außerdem alle empfangenen und weitergegebenen Daten, die zugehörigen Auswertungen und auch die von den Reglern 5 an ihre Ventile 6 jeweils ausgegebenen Stellsignale **9** in einem Datenspeicher **13.** Der Rechner 10, der Funkempfänger und -sender 11, 12 und der Datenspeicher 13 können als eine Einheit oder Modul **14** ausgeführt sein.

Die vor Ort in den Räumen 2 eingestellten Solltemperaturen T_{Soll} und die gemessenen Isttemperaturen T_{Ist} werden also an die Regler 5 nicht direkt, sondern nur über den zwischengeschalteten Rechner 10 weitergegeben, der diese eingestellten Solltemperaturen bei Bedarf derart modifiziert, dass sich das gewünschte Regelverhalten einstellt. In diesem Fall gibt der Rechner 10 also nicht die tatsächlich eingestellten Solltemperaturen T_{Soll}, sondern entsprechend höhere oder tiefere Solltemperaturen an die einzelnen Regler 5 weiter. Die Hoheit zum Einstellen der Solltemperaturen liegt somit beim Rechner 10.

Der Rechner 10 ist auch programmiert, dem Benutzer aufgrund der gespeicherten Daten Optimierungsvorschläge für die Raumtemperaturregelanlage 1 anzuzeigen. Anhand von über Jahre hinweg gespeicherten Daten können so beispielsweise Verschlechterungen des Wirkungsgrads der Raumtemperaturregelanlage 1 erkannt und dann entsprechende Gegenmaßnahmen getroffen werden. Auch kann der Rechner 10 aus den für die Vergangenheit gespeicherten Stellsignalen 9 der Ventile 6 die Ventilöffnungszeiten ermitteln und daraus optimierte Durchflüsse in den einzelnen Warmwasserheizkreisen 3 berechnen ("hydraulischen Abgleich"), die dann entweder vom Benutzer oder elektrisch entsprechend eingestellt werden können.

Bei der in **Fig. 1b** gezeigten Raumtemperaturregelanlage 1 sind der Rechner 10 und der Datenspeicher 13 zusätzlich über eine Internetschnittstelle **15** mit dem Internet **16** verbunden, so dass die von den Solltemperatur-Einstelleinrichtungen 4a gelieferten Solltemperaturen T_{Soll}, die gemessenen Isttemperaturen T_{Ist}, die gemessenen Luftfeuchtigkeiten, die ausgegebenen Stellsignale und auch die gespeicherten Daten weltweit zur Verfügung stehen. Auf all diese Daten kann - bei entsprechender Berechtigung - beispielsweise mit jedem ans Internet 16 angeschlossenen Computer oder mit einem Smartphone **17** mit entsprechender App zugegriffen werden. Dies kann - insbesondere im Winter bei Frost - in öffentlich zugänglichen Räumen, wie z.B. Schulen, ein entscheidender Vorteil sein und vor größeren Schäden schützen oder warnen. In der App kann für jeden Regler 5 bzw. für jeden Raum 2 eine minimale Isttemperatur eingestellt werden, bei deren Unterschreitung per Klingelton und Temperaturverlaufanzeige gewarnt wird.

Die von der Solltemperatur-Einstelleinrichtung 4a gelieferten Solltemperaturen T_{Soll} können über die Internetschnittstelle 15, z.B. über die App am Smartphone 17, vom Benutzer im Rechner 10 modifiziert werden. In diesem Fall geht die Solltemperatur-Einstellhoheit auf das berechtigte Smartphone über. Dies kann beliebig für einzelne, mehrere oder alle Regler 5 geschehen. Die Einstellhoheit kann individuell, temporär, reversibel oder dauerhaft vergeben werden. Alle möglichen Parameter der Raumtemperaturregelanlage 1 können entweder vor Ort am Rechner 10 oder über das Smartphone 17 eingesehen, eingestellt oder verstellt werden.

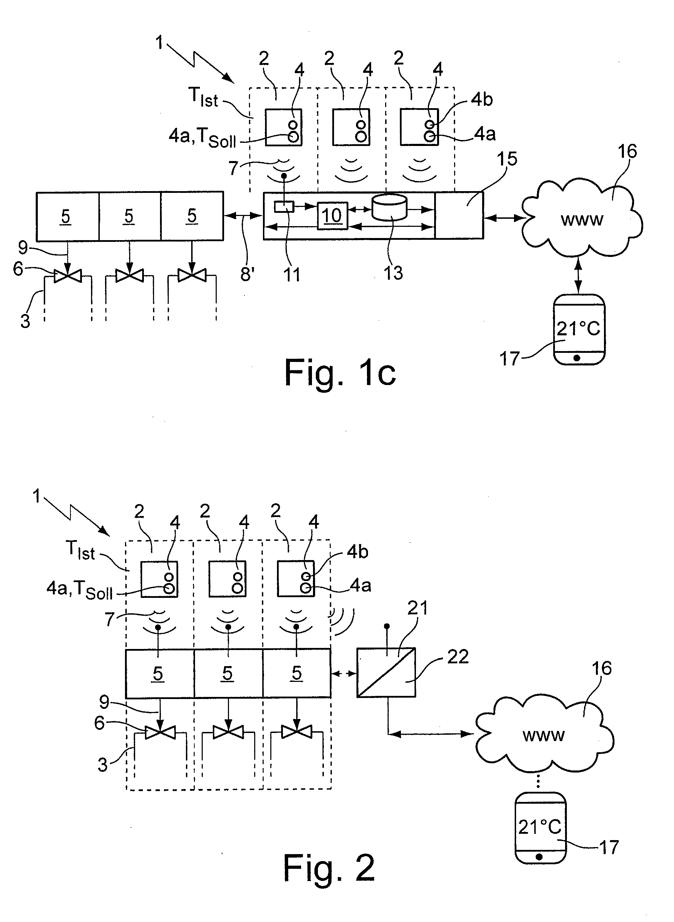

Von Fig. 1b unterscheidet sich die in **Fig. 1c** gezeigte Raumtemperaturregelanlage 1 einzig dadurch, dass hier der Rechner 10 mit den Reglern 5 nicht schnurlos, sondern über eine elektrische Leitung **8'** verbunden ist. Auch die Temperaturmessfühler 4, die Solltemperatur-Einstelleinrichtungen 4a und die Luftfeuchtigkeitsmessfühlern 4b können statt per Funk auch per Draht oder Bus mit dem Rechner 10 verbunden sein.

Im Unterschied zu Fig. 1 weist die in **Fig. 2** gezeigte Raumtemperaturregelanlage 1 keinen Rechner 10 auf, sondern die Messdaten und die eingestellten Solltemperaturen werden über Funk 7 direkt an die einzelnen Regler 5 übertragen, die dann die Ventile 6 der Warmwasserheizkreise 3 über Stellsignale 9 entsprechend ansteuern. Der gesamte Datenaustausch bzw. Funkverkehr wird auch von einem separaten Funkempfänger **21** empfangen, d.h. mitgehört, und kann über eine an den Funkempfänger 21 angeschlossene Internetschnittstelle **22** über das Internet 16 abgerufen werden. So können beispielsweise über Smartphone 17 jederzeit und von überall sowohl die Ist-Raumtemperatur als auch die eingestellte Solltemperatur der warmwasserbeheizten Räume 2 abgelesen werden. Wie gestrichelt angedeutet, können auch die Regler 5 an diese Internetschnittstelle 22 angeschlossen sein, damit beispielsweise auch die von den Reglern 5 an ihre Ventile 6 ausgegebenen Stellsignale 9 über das Internet 16 abgerufen werden können.

## Patentansprüche

1. Raumtemperaturregelanlage (1) zum Regeln der Raumtemperatur in warmwasserbeheizten Räumen (2) jeweils auf eine Solltemperatur (T_{Soll}),
wobei für jeden warmwasserbeheizten Raum (2) ein Warmwasserheizkreis (3) zum Heizen oder Kühlen des Raumes (2), mindestens ein in dem Raum (2) angeordneter Temperaturmessfühler (4) zum Messen der Isttemperatur (T_{Ist}), eine in dem Raum (2) angeordnete Solltemperatur-Einstelleinrichtung (4a) zum Einstellen der Solltemperatur (T_{Soll}) und ein Regler (5) zum Ansteuern eines Ventils (6) des Warmwasserheizkreises (3) anhand der gemessenen Isttemperatur (T_{Ist}) und der eingestellten Solltemperatur (T_{Soll}) vorgesehen sind,
**dadurch gekennzeichnet,**
**dass** die Solltemperatur-Einstelleinrichtungen (4a) mit den jeweiligen Reglern (5) über einen zwischengeschalteten Rechner (10) verbunden sind, der die von den Solltemperatur-Einstelleinrichtungen (4a) gelieferten Solltemperaturen (T_{Soll}) aufgrund von zusätzlichen Mess-, Auswertungs- oder Benutzerdaten entweder unverändert oder modifiziert an die Regler (5) weitergibt.

2. Raumtemperaturregelanlage nach Anspruch 1, **dadurch gekennzeichnet, dass** auch die Temperaturmessfühler (4) mit den jeweiligen Reglern (5) über den zwischengeschalteten Rechner (10) verbunden sind, der die Solltemperaturen (T_{Soll}) aufgrund der gemessenen Isttemperaturen (T_{Ist}) entweder unverändert oder modifiziert an die Regler (5) weitergibt.

3. Raumtemperaturregelanlage nach Anspruch 1 oder 2, **dadurch gekennzeichnet, dass** in jedem warmwasserbeheizten Raum (2) mindestens ein Luftfeuchtigkeitsmessfühler (4b) zum Messen der Luftfeuchtigkeit angeordnet ist und dass die Luftfeuchtigkeitsmessfühler (4b) mit den jeweiligen Reglern (5) über den zwischengeschalteten Rechner (10) verbunden sind, der die Solltemperaturen (T_{Soll}) aufgrund der gemessenen Luftfeuchtigkeiten entweder unverändert oder modifiziert an die Regler (5) weitergibt.

4. Raumtemperaturregelanlage nach einem der vorhergehenden Ansprüche, **dadurch gekennzeichnet, dass** der Rechner (10) einen Datenspeicher (13) zum Speichern der an den Solltemperatur-Einstelleinrichtungen (4a) eingestellten Solltemperaturen (T_{Soll}) und/oder der an die Regler (5) weitergegebenen Solltemperaturen und/oder der gemessenen Isttemperaturen (T_{Ist}) und/oder der gemessenen Luftfeuchtigkeiten und/oder der von den Reglern (5) an ihre Ventile (6) ausgegebenen Stellsignale (9) aufweist.

5. Raumtemperaturregelanlage nach Anspruch 4, **dadurch gekennzeichnet, dass** der Rechner (10) programmiert ist, die an die Regler (5) weiterzugebenden Solltemperaturen anhand der gespeicherten Daten zu modifizieren.

6. Raumtemperaturregelanlage nach Anspruch 4 oder 5, **dadurch gekennzeichnet, dass** der Rechner (10) programmiert ist, die gespeicherten Daten auszuwerten und dem Benutzer Optimierungsvorschläge, insbesondere für einen hydraulischen Abgleich der Warmwasserheizkreise (3), anzuzeigen.

7. Raumtemperaturregelanlage nach einem der vorhergehenden Ansprüche, **dadurch gekennzeichnet, dass** der Rechner (10) mit den Solltemperatur-Einstelleinrichtungen (4a) und/oder mit den Temperaturmessfühlern (4) und/oder mit den Luftfeuchtigkeitsmessfühlern (4b) und/oder mit den Reglern (5) über Funk (7, 8) oder elektrische Leitungen (8') verbunden ist.

8. Raumtemperaturregelanlage nach einem der vorhergehenden Ansprüche, **dadurch gekennzeichnet, dass** eine Netzwerk-Datenschnittstelle (15), insbesondere eine Schnittstelle zum Internet (16) und/oder zu einem Funknetz und/oder zu einem Bussystem, vorgesehen ist, über welche die von den Solltemperatur-Einstelleinrichtungen (4a) gelieferten Solltemperaturen (T_{Soll}) und/oder die gemessenen Isttemperaturen (T_{Ist}) und/oder die gemessenen Luftfeuchtigkeiten und/oder die ausgegebenen Stellsignale (9) und/oder die gespeicherten Daten über ein Netzwerk (16) abrufbar sind, insbesondere die an die Regler (5) weiterzugebenden Solltemperaturen auch modifizierbar sind.

9. Verfahren zum Regeln der Raumtemperatur in warmwasserbeheizten Räumen (2), wobei die Isttemperatur (T_{Ist}) der Räume (2) jeweils von mindestens einem Temperaturmessfühler (4) gemessen und jeweils über einen Regler (5), der einen Warmwasserheizkreis (3) des Raumes (2) anhand der gemessenen Isttemperatur (T_{Ist}) ansteuert, auf eine Solltemperatur (T_{Soll}) geregelt wird,
**dadurch gekennzeichnet,**
**dass** die vor Ort in den Räumen (2) eingestellten Solltemperaturen (T_{Soll}) aufgrund von zusätzlichen Mess-, Auswertungs- oder Benutzerdaten entweder unverändert oder modifiziert an die Regler (5) weitergegeben werden.

10. Verfahren nach Anspruch 9, **dadurch gekennzeichnet, dass** die an die Regler (5) weiterzugebenden Solltemperaturen aufgrund der gemessenen Isttemperaturen (T_{Ist}) modifizierbar sind.

11. Verfahren nach Anspruch 9 oder 10, **dadurch gekennzeichnet, dass** die an die Regler (5) weiterzugebenden Solltemperaturen aufgrund der in den Räumen (2) herrschenden Luftfeuchtigkeiten modifizierbar sind.

12. Verfahren nach einem der Ansprüche 9 bis 11, **dadurch gekennzeichnet, dass** die vor Ort in den Räumen (2) eingestellten Solltemperaturen (T_{Soll}) und/oder die an die Regler (5) weitergegebenen Solltemperaturen und/oder die gemessenen Isttemperaturen (T_{Ist}) und/oder die gemessenen Luftfeuchtigkeiten und/oder die von den Reglern (5) an ihre Ventile (6) ausgegebenen Stellsignale (9) gespeichert werden und dass die an die einzelnen Regler (5) weiterzugebenden Solltemperaturen anhand dieser gespeicherten Daten modifizierbar sind.

13. Verfahren nach Anspruch 12, **dadurch gekennzeichnet, dass** die gespeicherten Daten ausgewertet und basierend auf dieser Auswertung dem Benutzer Optimierungsvorschläge, insbesondere für einen hydraulischen Abgleich der Warmwasserheizkreise (3), angezeigt werden.

14. Verfahren nach einem der Ansprüche 9 bis 13, **dadurch gekennzeichnet, dass** die vor Ort in den Räumen (2) eingestellten Solltemperaturen (T_{Soll}) und/oder die gemessenen Isttemperaturen (T_{Ist},) und/oder die gemessenen Luftfeuchtigkeiten und/oder die ausgegebenen Stellsignale (9) und/oder die gespeicherten Daten über ein Netzwerk (16) durch einen Benutzer abrufbar sind und dass insbesondere die an die Regler (5) weiterzugebenden Solltemperaturen über das Netzwerk (16) durch den Benutzer modifizierbar sind.

15. Verfahren nach Anspruch 14, **dadurch gekennzeichnet, dass** das Abrufen der vor Ort in den Räumen (2) eingestellten Solltemperaturen (T_{Soll}) und/oder der gemessenen Isttemperaturen (T_{Ist}) und/oder der gemessenen Luftfeuchtigkeiten und/oder der ausgegebenen Stellsignale (9) und/oder der gespeicherten Daten und/oder das Verändern von Daten über ein Smartphone (17), insbesondere über eine App, erfolgen.

## Claims

1. Room temperature control system (1) for controlling the room temperature in rooms (2) heated by hot water to a respective setpoint temperature (T_{Soll}) in each case, wherein each room (2) heated by hot water is provided with a hot water heating circuit (3) for heating or cooling the room (2), at least one temperature sensor (4) which is arranged in the room (2) for measuring the actual temperature (T_{Ist}), a setpoint temperature-adjustment device (4a) which is arranged in the room (2) for adjusting the setpoint temperature (T_{Soll}) and a controller (5) for driving a valve (6) of the hot water heating circuit (3) on the basis of the measured actual temperature (T_{Ist}) and the adjusted setpoint temperature (T_{Soll}),
**characterized in that**
the setpoint temperature-adjustment devices (4a) are connected to the respective controllers (5) via an interconnected computer (10) which passes the setpoint temperatures (T_{Soll}) provided by the setpoint temperature-adjustment devices (4a) on to the controllers (5) either unchanged or modified, based on additional measurement data, evaluation data or user data.

2. Room temperature control system according to claim 1, **characterized in that** the temperature sensors (4) are also connected to the respective controllers (5) via the interconnected computer (10) which passes the setpoint temperatures (T_{Soll}) on to the controllers (5) either unchanged or modified, based on the measured actual temperatures (T_{Ist}).

3. Room temperature control system according to claim 1 or 2, **characterized in that** at least one air moisture sensor (4b) is arranged in each room (2) heated by hot water for measuring the air moisture, and the air moisture sensors (4b) are connected to the respective controllers (5) via the interconnected computer (10) which passes the setpoint temperatures (T_{Soll}) on to the controllers (5) either unchanged or modified, based on the measured air moistures.

4. Room temperature control system according to any one of the preceding claims, **characterized in that** the computer (10) comprises a data storage (13) for storing the setpoint temperatures (T_{Soll}) adjusted at the setpoint temperature-adjustment devices (4a) and/or the setpoint temperatures passed on to the controllers (5) and/or the measured actual temperatures (T_{Ist}) and/or the measured air moistures and/or the control signals (9) output by the controllers (5) to the valves (6) thereof.

5. Room temperature control system according to claim 4, **characterized in that** the computer (10) is programmed to modify the setpoint temperatures to be passed on to the controllers (5), based on the stored data.

6. Room temperature control system according to claim 4 or 5, **characterized in that** the computer (10) is programmed to evaluate the stored data and display to the user optimization proposals, in particular, for hydraulic balance of the hot water heating circuits (3).

7. Room temperature control system according to any one of the preceding claims, **characterized in that** the computer (10) is connected to the setpoint temperature-adjustment devices (4a) and/or to the temperature sensors (4) and/or to the air moisture sensors (4b) and/or to the controllers (5) via radio (7, 8) or electric lines (8').

8. Room temperature control system according to any one of the preceding claims, **characterized in that** a network data interface (15), in particular, an interface to the Internet (16) and/or to a radio network and/or to a bus system is provided, via which the setpoint temperatures (T_{Soll}) provided by the setpoint temperature-adjustment devices (4a) and/or the measured actual temperatures (T_{Ist}) and/or the measured air moistures and/or the output control signals (9) and/or the stored data can be retrieved via a network (16), in particular, via which the setpoint temperatures to be passed on to the controllers (5) can also be modified.

9. Method of controlling the room temperature in rooms (2) heated by hot water, wherein the actual temperature (T_{Ist}) of each room (2) is measured by at least one temperature sensor (4) and is controlled in each case to a setpoint temperature (T_{Soll}) by a controller (5) which controls a hot water heating circuit (3) of the room (2) on the basis of the measured actual temperature (T_{Ist}),
**characterized in that**
the setpoint temperatures (T_{Soll}) which are locally adjusted in the rooms (2) are passed on to the controllers (5) either unchanged or modified, based on additional measurement data, evaluation data or user data.

10. Method according to claim 9, **characterized in that** the setpoint temperatures to be passed on to the controllers (5) can be modified on the basis of the measured actual temperatures (T_{Ist}).

11. Method according to claim 9 or 10, **characterized in that** the setpoint temperatures to be passed on to the controllers (5) can be modified on the basis of the air moistures prevailing in the rooms (2).

12. Method according to any one of the claims 9 to 11, **characterized in that** the setpoint temperatures (T_{Soll}) which are locally adjusted in the rooms (2) and/or the setpoint temperatures passed on to the controllers (5) and/or the measured actual temperatures (T_{Ist}) and/or the measured air moistures and/or the control signals (9) output by the controllers (5) to the valves (6) thereof are stored and the setpoint temperatures to be passed on to the individual controllers (5) can be modified on the basis of this stored data.

13. Method according to claim 12, **characterized in that** the stored data is evaluated and, based on this evaluation, optimization proposals are displayed to the user, in particular, for hydraulic balance of the hot water heating circuits (3).

14. Method according to any one of the claims 9 to 13, **characterized in that** the setpoint temperatures (T_{Soll}) which are locally adjusted in the rooms (2) and/or the measured actual temperatures (T_{Ist}) and/or the measured air moistures and/or the output control signals (9) and/or the stored data can be retrieved by a user via a network (16) and that, in particular, the setpoint temperatures to be passed on to the controllers (5) can be modified by the user via the network (16).

15. Method according to claim 14, **characterized in that** retrieval of the setpoint temperatures (T_{Soll}) which are locally adjusted in the rooms (2) and/or of the measured actual temperatures (T_{Ist}) and/or of the measured air moistures and/or of the output control signals (9) and/or of the stored data and/or modification of data can be realized using a smartphone (17), in particular an app.

## Revendications

1. Installation de régulation de la température ambiante (1) pour réguler la température ambiante dans des pièces chauffées à l'eau chaude (2) à une température de consigne (T_{Soll}) respective,
un circuit de chauffage à eau chaude (3) pour chauffer ou refroidir la pièce (2), au moins une sonde de température (4) disposée dans la pièce (2) pour mesurer la température réelle (T_{Ist}), un dispositif de réglage de température de consigne (4a) disposé dans la pièce (2) pour régler la température de consigne (T_{Soll}) et un régulateur (5) pour commander une vanne (6) du circuit de chauffage à eau chaude (3) à l'aide de la température réelle mesurée (T_{Ist}) et de la température de consigne réglée (T_{Soll}) étant prévus pour chaque pièce (2) chauffée à l'eau chaude **caractérisée en ce**
**que** les dispositifs de réglage de température de consigne (4a) sont reliés aux régulateurs (5) respectifs par l'intermédiaire d'un ordinateur (10) intercalé qui transmet aux régulateurs (5) les températures de consigne (T_{Soll}) fournies par les dispositifs de réglage de température de consigne (4a) soit non modifiées, soit modifiées en fonction de données supplémentaires de mesure, d'évaluation ou de l'utilisateur.

2. Installation de régulation de la température ambiante selon la revendication 1, **caractérisée en ce que** les sondes de température (4) sont également reliées aux régulateurs (5) respectifs par l'intermédiaire de l'ordinateur (10) intercalé qui transmet aux régulateurs (5) les températures de consigne (T_{Soll}) soit non modifiées, soit modifiées en fonction des températures réelles (T_{Ist}) mesurées.

3. Installation de régulation de la température ambiante selon la revendication 1 ou 2, **caractérisée en ce qu'**au moins une sonde d'humidité de l'air (4b) pour mesurer l'humidité de l'air est disposée dans chaque pièce (2) chauffée à l'eau chaude et que les sondes d'humidité de l'air (4b) sont reliées aux régulateurs (5) respectifs par l'intermédiaire de l'ordinateur (10) intercalé qui transmet aux régulateurs (5) les températures de consigne (T_{Soll}) soit non modifiées, soit modifiées en fonction des humidités de l'air mesurées.

4. Installation de régulation de la température ambiante selon l'une des revendications précédentes, **caractérisée en ce que** l'ordinateur (10) comporte une mémoire de données (13) pour mémoriser les températures de consigne (T_{Soll}) réglées aux dispositifs de réglage de température de consigne (4a) et/ou les températures de consigne transmises aux régulateurs (5) et/ou les températures réelles (T_{Ist}) mesurées et/ou les humidités de l'air mesurées et/ou les signaux de commande (9) délivrés par les régulateurs (5) à leurs vannes (6).

5. Installation de régulation de la température ambiante selon la revendication 4, **caractérisée en ce que** l'ordinateur (10) est programmé pour modifier les températures de consigne à transmettre aux régulateurs (5) à l'aide des données mémorisées.

6. Installation de régulation de la température ambiante selon la revendication 4 ou 5, **caractérisée en ce que** l'ordinateur (10) est programmé pour évaluer les données mémorisées et afficher à l'utilisateur des propositions d'optimisation, en particulier pour un équilibrage hydraulique des circuits de chauffage à eau chaude (3).

7. Installation de régulation de la température ambiante selon l'une des revendications précédentes, **caractérisée en ce que** l'ordinateur (10) est relié aux dispositifs de réglage de température de consigne (4a) et/ou aux sondes de température (4) et/ou aux sondes d'humidité de l'air (4b) et/ou aux régulateurs (5) par radio (7, 8) ou câbles électriques (8').

8. Installation de régulation de la température ambiante selon l'une des revendications précédentes, **caractérisée en ce qu'**une interface de données réseau (15), en particulier une interface avec Internet (16) et/ou avec un réseau hertzien et/ou avec un système de bus est prévue, via laquelle les températures de consigne (T_{Soll}) fournies par les dispositifs de réglage de température de consigne (4a) et/ou les températures réelles (T_{Ist}) mesurées et/ou les humidités de l'air mesurées et/ou les signaux de commande (9) délivrés et/ou les données mémorisées peuvent être appelées via un réseau (16), en particulier les températures de consigne à transmettre aux régulateurs (5) sont aussi modifiables.

9. Procédé de régulation de la température ambiante dans des pièces (2) chauffées à l'eau chaude, dans lequel la température réelle (T_{Ist}) de chacune des pièces (2) est mesurée par au moins une sonde de température (4) et régulée à une température de consigne (T_{Soll}) au moyen d'un régulateur (5) qui commande un circuit de chauffage à eau chaude (3) de la pièce (2) à l'aide de la température réelle (T_{Ist}) mesurée,
**caractérisé en ce**
**que** les températures de consigne (T_{Soll}) réglées sur place dans les pièces (2) sont transmises aux régulateurs (5) soit non modifiées, soit modifiées en fonction de données supplémentaires de mesure, d'évaluation ou de l'utilisateur.

10. Procédé selon la revendication 9, **caractérisé en ce que** les températures de consigne à transmettre aux régulateurs (5) sont modifiables en fonction des températures réelles (T_{Ist}) mesurées.

11. Procédé selon la revendication 9 ou 10, **caractérisé en ce que** les températures de consigne à transmettre aux régulateurs (5) sont modifiables en fonction des humidités de l'air qui règnent dans les pièces (2).

12. Procédé selon l'une des revendications 9 à 11, **caractérisé en ce que** les températures de consigne (T_{Soll}) réglées sur place dans les pièces (2) et/ou les températures de consigne transmises aux régulateurs (5) et/ou les températures réelles (T_{Ist}) mesurées et/ou les humidités de l'air mesurées et/ou les signaux de commande (9) délivrés par les régulateurs (5) à leurs vannes (6) sont mémorisés et que les températures de consigne à transmettre aux différents régulateurs (5) sont modifiables à l'aide de ces données mémorisées.

13. Procédé selon la revendication 12, **caractérisé en ce que** les données mémorisées sont évaluées et, sur la base de cette évaluation, des propositions d'optimisation, en particulier pour un équilibre hydraulique des circuits de chauffage à eau chaude (3), sont affichées à l'utilisateur.

14. Procédé selon l'une des revendications 9 à 13, **caractérisé en ce que** les températures de consigne (T_{Soll}) réglées sur place dans les pièces (2) et/ou les températures réelles (T_{Ist}) mesurées et/ou les humidités de l'air mesurées et/ou les signaux de commande (9) délivrés et/ou les données mémorisées peuvent être appelées par un utilisateur via un réseau (16) et que, en particulier, les températures de consigne à transmettre aux régulateurs (5) sont modifiables par l'utilisateur via le réseau (16).

15. Procédé selon la revendication 14, **caractérisé en ce que** l'appel des températures de consigne (T_{Soll}) réglées sur place dans les pièces (2) et/ou des températures réelles (T_{Ist}) mesurées et/ou des humidités de l'air mesurées et/ou des signaux de commande (9) délivrés et/ou des données mémorisées et/ou la modification de données s'effectuent au moyen d'un smartphone (17), en particulier au moyen d'une application.
